# EUROPÄISCHE PATENTSCHRIFT

(11) **EP 1 370 782 B1**
(45) Veröffentlichungstag und Bekanntmachung des Hinweises auf die Patenterteilung: **16.02.2005**
(21) Anmeldenummer: 02740425.0
(22) Anmeldetag: 19.03.2002
(51) Int. Cl.: F16D 27/115, F16D 27/00

(54) **LASTSCHALT-AUTOMATGETRIEBE FÜR FAHRZEUGE**
POWER SHIFT AUTOMATIC GEARBOX FOR MOTOR VEHICLES
BOITE DE VITESSES AUTOMATIQUE A COUPLAGE SOUS CHARGE POUR VEHICULES

(30) Priorität: 19.03.2001 DE 10113300
(43) Veröffentlichungstag der Anmeldung: 17.12.2003
(73) Patentinhaber: Compact Dynamics GmbH, 82319 Starnberg (DE)
(72) Erfinder: Gründl, Andreas, 81377 München (DE); Hoffmann, Bernhard, 82319 Starnberg (DE)
(74) Vertreter: Schmidt, Steffen J., Dipl.-Ing.
(86) Internationale Anmeldenummer: PCT/EP2002/003038
(87) Internationale Veröffentlichungsnummer: WO 2002/079660

(56) Entgegenhaltungen:
- FR-A- 2 782 361
- US-A- 1 635 068
- US-A- 3 235 045
- US-A- 4 895 236
- US-A- 5 024 638

## Beschreibung

### Hintergrund der Erfindung

Die Erfindung betrifft ein Lastschalt-Automatgetriebe mit wenigstens einer Getriebeanordnung zum Auswählen der jeweiligen Übersetzungsverhältnisse, und mit wenigstens einer gesteuert betätigbaren Lamellenkupplung zum Festhalten oder Freigeben einzelner Elemente des Planetengetriebes, wodurch Gangwechselvorgänge ohne Unterbrechung des Drehmomentflusses möglich sind. Die Lamellenkupplung weist einen ersten und einen zweiten Lamellensatz auf, die ineinander greifen und durch axiales Gegeneinanderpressen mit einander in Reibungseingriff bringbar sind. Der erste Lamellensatz ist mit einer ersten Welle verbunden und der zweite Lamellensatz ist mit einer zweiten Welle verbunden. Die Lamellenkupplung ist mit einer einen Rotor und einen Stator aufweisenden elektrischen Maschine getrieblich gekoppelt um durch die elektrische Maschine die beiden Lamellensätze in oder außer Reibungseingriff zu bringen.

### Begriffsdefinitionen

Bei automatischen Getrieben für Kraftfahrzeuge werden sog. automatisierte Getriebe und sog. Lastschalt-Automatgetriebe unterschieden, die in ihrer Auswirkung auf die Fahrdynamik auf nachstehend näher erläuterten unterschiedlichen Konzepte beruhen.

### Stand der Technik

Im Stand der Technik ist es bekannt, automatisierte Getriebe dadurch zu realisieren, dass bei Schaltgetrieben alle sonst vom Fahrer ausgeführten Schaltvorgänge von einem elektronisch gesteuerten Aktorsystem übernommen werden. Fahrphysikalisch bedeutet dies, dass während eines Schaltvorgangs stets eine Kupplung geöffnet und damit der Drehmoment-Fluss unterbrochen wird.

Bei den ebenfalls im Stand der Technik bekannten Lastschalt-Automatgetrieben ist es möglich auch unter Last zu schalten. Fahrphysikalisch bedeutet dies, dass auch während des Schaltvorgangs der Drehmoment-Fluss und damit der Vortrieb des Fahrzeugs nicht unterbrochen wird.

Ein massgeblicher Unterschied dieser beiden Konzepte ist die deutliche Komfort-Beeinträchtigung insbesondere bei Personenkraftwagen mit hohem Beschleunigungsvermögen oder bei Fahrzeugen mit Geländeeinsatz, bei denen eine Unterbrechung des Vortriebes während des Schaltvorganges fahrphysikalisch nicht akzeptabel ist.

Lastschalt-Automatgetriebe führen das Anfahren, Auswählen der jeweiligen Übersetzungsverhältnisse und das Schalten der Gänge selbsttätig aus. Als Anfahrelement dient üblicherweise ein hydrodynamischer Drehmomentwandler mit oder ohne Überbrückungskupplung zur Beseitigung des Schlupfes des Drehmomentwandlers, der auch zur Schwingungsdämpfung dient.

Zum Auswählen der jeweiligen Übersetzungsverhältnisse dienen mehrere Sätze von Planetengetrieben, die dem hydrodynamischen Drehmomentwandler nachgeschaltet sind und deren Zahl und Anordnung von der Gangzahl und den geforderten Übersetzungsverhältnissen abhängig ist.

Mittels Hydraulik-betätigter Lamellenkupplungen und Lamellenbremsen werden die einzelnen Elemente der Planetengetriebe festgehalten oder freigegeben, wodurch die Gangwechselvorgänge ohne Unterbrechung des Drehmomentflusses möglich sind.

Eine Getriebesteuerung dient zur Definition der jeweiligen Gänge und Schaltzeitpunkte in Abhängigkeit von der Stellung des Gangwahlhebels, der Fahrpedalstellung, dem Motorzustand und der Fahrzeuggeschwindigkeit. Üblicherweise arbeitet die Getriebesteuerung elektronisch-hydraulisch.

Eine motorgetriebene Hydraulikpumpe dient der Versorgung des hydrodynamischen Drehmomentwandlers, der Schaltelemente und der Getriebesteuerung mit Hydraulikdruck.

Aus der WO 99/64756 ist eine Kupplungsanordnung bekannt, mit der Drehzahlunterschiede zweier Wellen ausgeglichen werden können. Hierbei wird eine Kupplungsdruckplatte mittels eines elektrisch angetriebenen Motors in axialer Richtung verschoben. Dazu ist der Elektromotor eine der Wellen umgebend angeordnet und dazu eingerichtet, eine Hohlmutter in Umdrehung zu versetzen, Die Hohlmutter ist am Gehäuse des Elektromotors gelagert und dient dazu, eine auf der Welle gelagerte Hohlspindel in axialer Richtung zu bewegen. Auf der Hohlspindel sitzt ein weiteres Lager, das einen Mitnehmer trägt. Dieser Mitnehmer betätigt eine Feder, die auf die Kupplungsdruckplatte wirkt.

Nachteilig ist hierbei der hohe Aufwand bei den Lagern des Elektromotors und der Hohlmutter/-spindel-Anordnung auf der Welle und in dem Kupplungsgehäuse.

Aus der DE 198 37 115 A1 ist eine Antriebsanordnung für ein Kraftfahrzeug bekannt, bei der an den Antriebsstrang des Kraftfahrzeuges bestehend aus Verbrennungsmotor, Kupplung und Abtriebswelle ein Elektromotor mittels einer Verriegelungseinrichtung ankoppelbar ist. Allerdings sind die in diesem Dokument beschriebenen Konzepte hinsichtlich ihrer technischen Realisierung sehr wenig aussagekräftig. Insbesondere fehlt ein Hinweis zur Realisierung der Verriegelungseinrichtung und deren Ankopplung an den Antriebsstrang.

Aus der DE 38 43 989 A1 ist ein Betätiger für ein Reibungskupplung eines Schaltgetriebes bekannt, die zwei Wellenabschnitte miteinander koppelt. Außen an einem Schaltgetriebe ist ein Elektromotor angesetzt, der über eine Gewindespindel/Mutteranordnung einen Schieber betätigt, der radial in Richtung der Welle ragt und an einem Axial/Radial-Rollenlager an der Welle abgestützt ist. An dem Axial/Radial-Rollenlager greift ein Hebel an, der auf eine Kupplungsdruckplatte wirkt, die die Kupplung ein- bzw. ausrückt.

Nachteilig ist auch hier der hohe Aufwand an Lagern und der erhebliche Raumbedarf der Gesamtanordnung.

### Der Erfindung zugrundeliegendes Problem

Die oben beschriebenen Lastschalt-Automatgetriebe haben zur Betätigung der hydraulikbetätigten Lamellenkupplungen rotierende hydraulische Stellzylinder. Deren Dichtungen sind ebenfalls der Rotation ausgesetzt. Dies führt zu erheblichen Reibungsverlusten (bis zu 5% des gesamten durch das Lastschalt-Automatgetriebe übertragenen Drehmomentes). Ausserdem führen die hierbei auftretenden Leckagen des Hydraulikfluides zu einer zusätzlich erforderlichen Druckbereitstellung durch die motorgetriebene Hydraulikpumpe. Schliesslich erfordert die hydraulische Betätigung der Lamellenkupplungen insgesamt einen sehr hohen Aufwand. Die weiterhin vorstehend beschriebenen Anordnungen mit Elektromotoren zur Betätigung der Lamellenkupplungen sind mit sehr aufwendigen Lagerungen ausgestattet.

Der Erfindung liegt daher das Problem zugrunde, diese Lastschaft-Automatgetriebe so zu verändern, dass sie signifikant kostengünstiger sind und einen höheren Wirkungsgrad haben.

### Erfindungsgemässe Lösung

Die erfindungsgemässe Lösung dieser Aufgabe besteht darin, dass bei einem Lastschalt-Automatgetriebe der eingangs beschriebenen Art der Rotor der elektrischen Maschine mittels eines Getriebes zur Umsetzung einer Drehbewegung in eine Schubbewegung drehbar und axial beweglich auf einer der Wellen gelagert ist Mit anderen Worten wird erfindungsgemäß der Rotor des Elektromotors einerseits über seinen Luftspalt zum Stator und andererseits über das Getriebe zur Umsetzung der Drehbewegung in die Schubbewegung in der Gesamtanordnung positioniert.

Diese völlig neuartige Ausgestaltung hat den Vorteil, dass die aufwendige und mit ihren Dichtungen erhebliche Reibungsverluste erzeugende hydraulische Zylinder/Kolbenanordnung zum Betätigen der Lamellenkupplung wegfällt und durch einen Elektromotor ersetzt ist. Der Elektromotor darf zwar während seines Betriebes (elektrische und andere) Verluste machen, in den Endstellungen, in denen die Lamellenkupplung ein- oder ausgerückt ist, sollten die Verluste jedoch minimiert sein Die dauernden Reibungsverluste der Dichtungen fallen jedoch bei der Erfindung weg. Dies liegt unter anderem daran, dass der Rotor des unbestromten Elektromotors sich mit der gleichen Drehzahl drehen kann wie die ihn tragende Welle, so dass hierbei keine Verluste auftreten. Auch erlaubt diese Ausgestaltung, den Rotor auf den ebenfalls auf diesem Rotor sitzenden Lamellensatz wirken zu lassen, so dass zwichen dem Rotor und dem Lamellensatz ebenfalls keine Drehzahlunterschiede (und damit Reibungsverluste) auftreten. Diese Ausgestaltung bietet noch eine Reihe von weiter unten im Detail erläuterten Vorteilen und zusätzlichen Nutzen.

### Vorteilhafte Weiterbildungen der Erfindung

In einer bevorzugten Ausführungsform der Erfindung ist das Getriebe zur Umsetzung einer Drehbewegung in eine Schubbewegung eine Spindel/Mutter-Anordnung, deren einer Teil drehfest und axial unverschiebbar mit einer der Wellen, und deren anderer Teil mit dem Rotor drehfest und axial unverschiebbar verbunden ist. Dies ist eine Möglichkeit den Rotor auf der Welle zu lagern ohne die im Stand der Technik erforderlichen separaten Rollen-, oder Kugellager zu benötigen.

Weiterhin führt bei der Erfindung der Rotor der elektrischen Maschine bel Bestromung in Abhängigkeit von seiner Drehzahl und/oder Drehrichtung eine axiale Bewegung relativ zu der zweiten bzw. der ersten Welle ausführt und hat ohne Bestromung im wesentlichen die Drehzahl der ihn tragenden Welle. Dieser Aspekt der Erfindung stellt einen nennenswerten Unterschied zu den Ausgestaltungen nach dem Stand der Technik dar: Bei der Erfindung dreht sich der Rotor bei unbestromtem Elektromotor stets mit der ihn tragenden Welle mit. Durch Drehzahl- und/oder Drehrichtungs-unterschiede (hervorgerufen durch eine entsprechende Bestromung) des Rotors relativ zur Drehzahl der Welle führt dieser eine axiale Bewegung (relativ zur Welle) aus und betätigt die Lamellenkupplung. Im Stand der Technik sind die Elektromotoren als eigenständige Baugruppen an/in dem Getriebe angeordnet und arbeiten unabhängig von der Rotation der Welle.

Weiterhin ist der Rotor der elektrischen Maschine mit dem Lamellensatz drehbar verbunden, der an der den Rotor tragenden Welle angeordnet ist, so dass bei einer Axialbewegung des Rotors die beiden Lamellensätze in oder außer Reibungseingriff kommen. Diese drehbare Verbindung kann derart realisiert sein, daß bei nicht in Reibungs-Eingriff stehender Lamellenkupplung die elektrische Maschine praktisch keine Verbindung mit der Lamellenkupplung hat. Da im Übrigen auch die beiden Lamellensätze voneinander getrennt sind, wird kein Moment übertragen. Der Motor kann, aber muss nicht von dem jeweiligen Lamellensatz abgetrennt werden. Ungeachtet dessen können durch die vorliegende Erfindung auch keine Reibungsverluste wie bei herkömmlichen Anordnungen auftreten. Dabei kann eine der beiden Wellen auch als Hohlwelle ausgeführt sein, in die die andere Welle koaxial hineinragt.

Vorzugsweise ist der Rotor der elektrischen Maschine mit dem Lamellensatz durch ein in axialer Richtung zumindest teilweise nachgiebiges Federelement drehbar verbunden. Wenn der Rotor in einer Position ist, bei der die Lamellenkupplung nicht in Reibungs-Eingriff steht, ist dabei das Federelement mit dem Rotor und/oder dem zweiten Lamellensatz nicht in Berührung, bzw. dreht mit der gleichen Drehzahl wie der Lamellensatz und der unbestromte Rotor des Elektromotors, so daß auch keine Reibungsverluste entstehen.

Erfindungsgemäss ist die elektrische Maschine eine Asynchron-Maschine oder eine permanenterregte Maschine, wobei permanenterregte im Gegensatz zu Asynchronmaschinen besonders klein bauen, aber Dauerverluste auch im nicht angetriebenen Zustand im Stator erzeugen. Grundsätzlich sind auch andere Maschinen-Typen, zum Beispiel sog. switched reluctance Maschinen möglich. Entscheidend ist, daß die elektrische Maschine kostengünstig herstellbar ist, eine lange Lebensdauer hat, ein ausreichend hohes Haltemoment bereitstellen kann und einen Drehzahl-Bereich bis etwa 8000 Upm (also der maximalen Drehzahl der den Rotor der Elektromotor tragenden Welle) abdeckt.

In einer bevorzugten Ausführungsform der Erfindung hat ein Element (zum Beispiel die Spindel) der Spindel/Mutter-Anordnung eine eingerückte Endstellung und eine ausgerückte Endstellung mit jeweils einer Raststelle, und ein anderes Element (zum Beispiel die Mutter) der Spindel/Mutter-Anordnung hat Rastelemente, die dazu eingerichtet sind, in die jeweiligen Raststellen einzurasten, wenn der Rotor der elektrische Maschine die jeweilige Endstellungen erreicht hat.

Weiterhin ist die elektrische Maschine mit einer elektronischen Steuerung verbunden, die dazu eingerichtet ist, die elektrische Maschine entweder als Elektromotor oder als elektrischer Generator zu betreiben. Dazu hat die elektronische Steuerung eine vom Typ (permanenterregte Maschine, Asynchronmaschine oder dergl.) der elektrischen Maschine abhängige Leistungsansteuerung, die sowohl in der Lage ist, in die elektrische Maschine elektrische Leistung einzuspeisen (elektromotorischer Betrieb), als auch aus der elektrischen Maschine elektrische Leistung zu entnehmen (generatorischer Betrieb). Eine solche Anordnung kann (auch in Kombination mehrerer Aktoren) als Generator bzw. Anlasser benutzt werden.

Dazu ist die elektronische Steuerung mit einer Sensoranordnung verbunden, die dazu eingerichtet ist ein für die Rotation der ersten Welle repräsentatives Signal bereitzustellen. Es ist jedoch auch möglich, im Fall einer sensorlosen Maschinensteuerung ohne Sensor auszukommen. Des weiteren ist die elektronische Steuerung dazu eingerichtet, die elektrische Maschine in der elektromotorischen Betriebsart zum Überführen der Lamellenkupplung in die eingerückte Endstellung bzw. die ausgerückte Endstellung mit einer von der Drehzahl der ersten Welle abweichenden Drehzahl zu betreiben. Abhängig von der Drehrichtung der ersten Welle und deren Drehzahl sowie je nach dem, ob die Lamellenkupplung eingerückt oder ausgerückt werden soll, dreht sich der Rotor der elektrischen Maschine - gesteuert von der elektronischen Steuerung - entweder langsamer oder schneller als die erste Welle. Sofern der Rotor gegenüber der ersten Welle keine Relativbewegung in axialer Richtung ausführen soll, dreht sich der Rotor - gesteuert von der elektronischen Steuerung, in stromlosem Zustand bzw. durch die Mitnahme in einer der Endstellungen - in der gleichen Richtung und mit der gleichen Drehzahl wie die ihn tragende Welle.

### Kurzbeschreibung der Zeichnung

In den Zeichnungen sind Details der Erfindung in unterschiedlichen Ausführungsformen veranschaulicht.

Fig. 1 zeigt eine schematische Seitenansicht eines Lastschalt-Automatgetriebes gemäß dem Stand der Technik.

Fig. 2 zeigt einen in der Fig. 1 strichliert eingefaßten Ausschnitt II, bei dem erfindungsgemäß die hydraulische Zylinder/Kolbenanordnung durch die Anordnung gemäß Fig. 3 zu ersetzen ist.

Fig. 3 zeigt einen schematischen Ausschnitt eines Lastschalt-Automatgetriebes gemäß der Erfindung.

### Detaillierte Beschreibung der Zeichnung

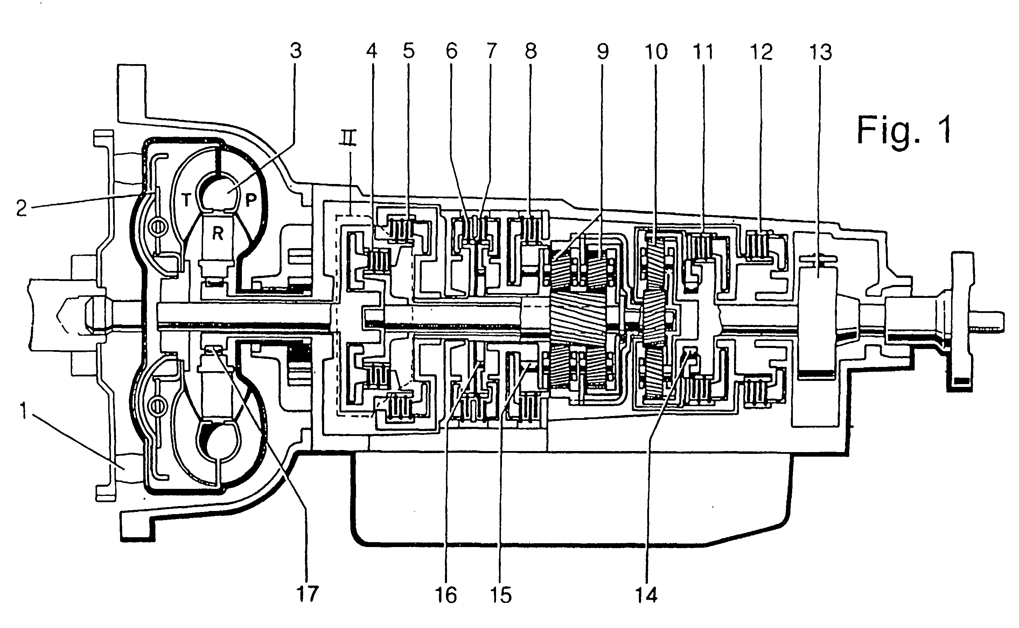

Das in Fig. 1 dargestellte Getriebe nach dem Stand der Technik für Personenkraftwagen mit Hinterradantrieb hat einen Strömungswandler 3 mit einer Wandler-Überbrückungskupplung 2. Bei höheren Drehzahlen arbeitet der Wandler als Strömungskupplung. Die nachgeschalteten Planetenradsätze sorgen durch wahlweises Festhalten oder Verblocken ihrer Wellen für die Übersetzungen der weiteren vier Vorwärtsgänge und des Rückwärtsganges, wobei der größte Gang eine Übersetzung in Schnelle aufweist. Die zum Verblocken verwendeten Lamellenkupplungen werden über ein hydraulisches Steuersystem geregelt, das den Schaltvorgang in Abhängigkeit von der gewählten Fahrstufen, der Fahrgeschwindigkeit, dem Fahrzustand sowie der Motorbelastung automatisch einleitet.

Im ersten Gang, der in der Übersetzung etwa dem zweiten Gang eines Schaltgetriebes entspricht, sind die Kupplungen 4 und 11 geschlossen. Der vordere Planetenradträger des Radsatzes 9 stützt sich bei Zug über den Freilauf 15 ab, bei Schub wird er überholt. Der Planetenradsatz 10 läuft als Block mit um. Wenn sich der Fahrstufenwählhebel In Stellung "1" befindet und somit ein Schalten in höhere Gänge unerwünscht ist, um mit dem Motor bremsen zu können, ist zusätzlich die Kupplung 8 geschlossen. Im dritten Gang sind die Kupplungen 4, 5, 7 und 11 geschlossen, die Freiläufe 15 und 16 werden überholt. Die Planetensätze 9 und 10 laufen als Block mit der Übersetzung von 1:1 um.

Im vierten Gang sind die Lamellenkupplungen 4, 5, 7 und 12 geschlossen, die Freiläufe 14, 15 und 16 werden überholt, und der Planetenradsatz 9 läuft als Block mit um, während die Hohlwelle mit dem Sonnenrad des Planetenradsatzes 10 feststeht, so dass eine Übersetzung ins Schnelle erfolgt. Außerdem wird ab einer bestimmten Fahrgeschwindigkeit durch die Kupplung 2 der hydrodynamische Drehmomentwandler 3 überbrückt.

Im Rückwärtsgang sind die Kupplungen 5, 8 und 11 geschlossen, der Planetenradsatz 10 läuft als Block mit um, und über den festgehaltenen vorderen Planetenradträger des Radsatzes 9 tritt eine Drehrichtungsumkehr der Abtriebswelle ein. Abtriebsseitig ist ein Fliehkraftregler 13 vorgesehen, welcher der Geschwindigkeit entsprechende Impulse für das Steuersystem erzeugt.

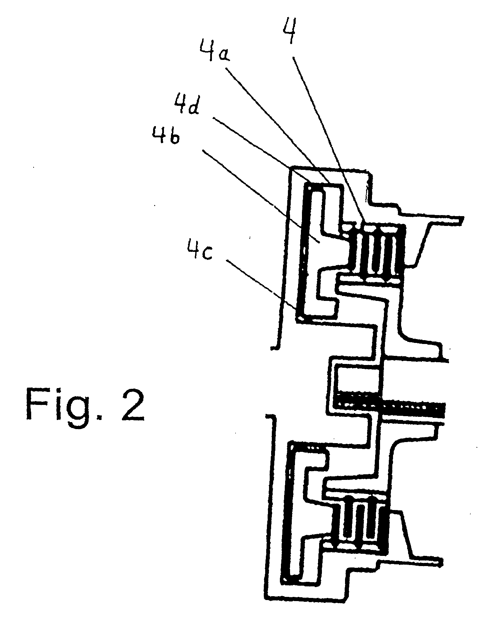

Der in Fig. 2 gezeigte Ausschnitt II von Fig. 1 zeigt die Lamellenkupplung 4 mit einer ihr zugeordneten Zylinder/Kolbenanordnung 4a, 4b. Da der Kolben 4a relativ zu dem Zylinder 4b rotiert, sind die inneren und äußeren Dichtungen 4c, 4d erheblichen Belastungen und damit auch Verschleiß unterworfen. Der Kolben 4b drängt bei Beaufschlagung mit Hydraulikfluid die Lamellensätze der Lamellenkupplung 4 zusammen.

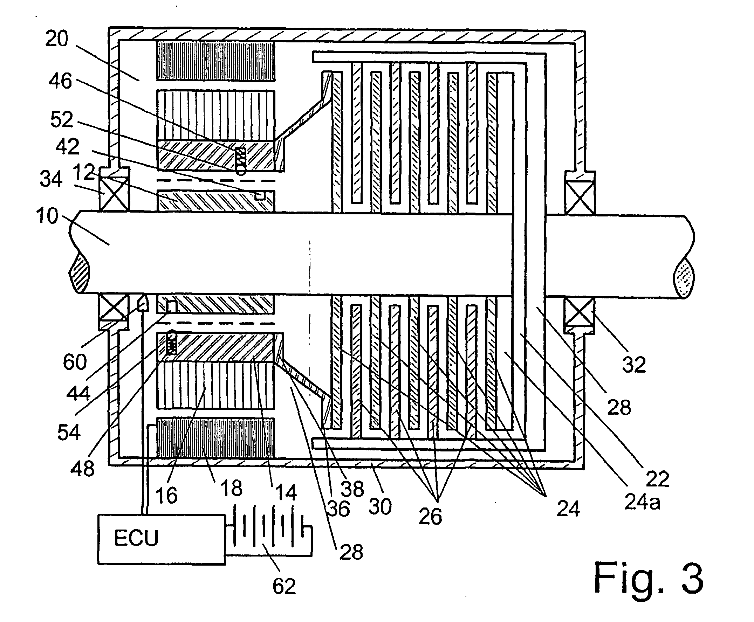

Der in Fig. 3 gezeigte Ausschnitt einer erfindungsgemäßen Anordnung entspricht der in Fig. 2 gezeigten Anordnung in funktionaler Hinsicht. Hier ist jedoch erfindungsgemäß die Zylinder/Kolbenanordnung aus den Fig. 1, 2 durch eine elektrische Maschine ersetzt, die mit der Lamellenkupplung getrieblich gekoppelt ist um die beiden Lamellensätze in oder außer Reibungseingriff zu bringen.

Auf einer als Antriebswelle des Lastschalt-Automatgetriebes wirkenden ersten Welle 10 ist eine mit einem vorzugsweise mehrzügigen Außengewinde versehene Spindel 12 drehfest und axial unverschiebbar angeordnet Auf der Spindel 12 sitzt eine mit einem entsprechenden Innengewinde versehene Mutter 14 im Schraubefngriff. Außen auf der Mutter 14 ist drehfest ein Rotor 16 einer elektrischen Maschine 20 angeordnet. Dieser Rotor 16 ist durch einen Luftspalt getrennt von einem Stator 18 umgeben. Damit kann sich der Rotor 16 bei einer Relativdrehung um die Welle 10 auch in axialer Richtung bewegen. Sowohl bei dem Rotor 16, als auch bei dem Stator 18 sind jedoch der besseren Übersicht wegen die die elektrischen Details (Phasenzuführungen, Statorwicklungen, Kurzschlusskäfig etc.) weggelassen. Die elektrische Maschine 20 kann für ein Lastschalt-Automatgetriebe eines PKW zum Beispiel einen Durchmesser von etwa 150 mm und eine Dicke von etwa 20 mm aufweisen.

Auf der ersten Welle 10 ist ein erster Lamellensatz 24 der Lamellenkupplung 22 längsverschieblich aber drehfest angeordnet, der im Beispiel aus fünf kreisscheibenförmigen Lamellen-Scheiben gebildet ist. Ein zweiter Lamellensatz 26 der Lamellenkupplung 22 ist im Beispiel aus vier kreisscheiben-förmigen Scheiben gebildet und an der Innenwandung einer als Hohlwelle ausgebildeten zweiten Welle 28 drehfest aber längsverschieblich aufgenommen. Die erste Welle 10 ragt in das Innere der als Hohlwelle ausgebildeten zweiten Welle 28 hinein und die beiden Lamellensätze 24, 26 der Lamellenkupplung 22 greifen in radialer Richtung in einander. Die von der elektrischen Maschine 20 am weitesten abliegende Lamelle des ersten Lamellensatzes 24 ist an einer an der Welle 10 angeordneten Stützplatte 24a abgestützt, damit die Lamellen der Lamellenkupplung 22 durch die elektrische Maschine 20 zusammengepresst werden können.

An der der Lamellenkupplung 22 zugewandten Stirnfläche 32 der Mutter 14 stützt sich eine in axialer Richtung zumindest teilweise nachgiebige Tellerfeder 28 mit ihrem inneren Rand 38 in axialer Richtung ab. Mit ihrem äußeren Rand 36 kann die Tellerfeder 28 den ersten Lamellensatz 24 der Lamellenkupplung 22 gegen den zweiten Lamellensatz 26 der Lamellenkupplung 22 pressen, wenn sich der Rotor 16 der elektrischen Maschine 20 mit längs der ersten Welle 10 in Richtung auf die Lamellenkupplung 22 zu bzw. sich von dieser weg bewegt. Bei einer Axialbewegung des Rotors - hervorgerufen durch eine Relativdrehung zu der Drehbewegung der Welle 10 - kommen damit die beiden Lamellensätze 24, 26 in oder außer Reibungseingriff und die erste Welle 10 wird mit der zweiten Welle 28 fest gekoppelt. Da die Lamellen über eine Innen- bzw. Aussenverzahnung an den jeweiligen Wellen drehfest, aber axial verschiebbar angebracht sind, führt dabei die in dem Gehäuse 30 mittels des Lagers 32 aufgenommene zweite Welle 28 gegenüber der ebenfalls in dem Gehäuse 30 über das Lager 34 aufgenommenen ersten Welle 10 keine axiale Bewegung aus. Die Richtung der Axialbewegung des Rotors 16 hängt davon ab, wie schnell und in welche Richtung sich der Rotor 16 der elektrischen Maschine 20 relativ zu der - sich im Betrieb ebenfalls drehenden - ersten Welle 10 dreht.

Um die Lamellenkupplung 22 sicher in der eingerückten oder der ausgerückten Stellung zu halten ist die Spindel 12 der Spindel/Mutter-Anordnung für eine eingerückte Endstellung und eine ausgerückte Endstellung mit jeweils einer Raststelle in Form einer Ausnehmung 42, 44 versehen. Die Mutter 14 der Spindel/ Mutter-Anordnung weist entsprechende Sacklöcher auf, in denen mittels jeweiligen Federelementen 46, 48 vorgespannte Rastelemente in Form von Kugeln 52, 54 aufgenommen sind, die dazu eingerichtet sind, in die jeweiligen Ausnehmungen 42, 44 einzurasten, wenn sich der Rotor 16 und mit ihm die Mutter 14 in die jeweiligen Endstellungen bewegt. Das Gewinde könnte auch in der Art eines Bajonettverschlusses gebaut sein um die beiden Endstellungen bereitzustellen. Die elektrische Maschine 20 ist mit einer elektronischen Steuerung ECU verbunden um die elektrische Maschine 20 entweder als Elektromotor oder als elektrischer Generator zu betreiben.

Die erfindungsgemäße Ausgestaltung erlaubt einen generatorischen Betrieb der elektrischen Maschine 20 auch bei nicht eingerückter Stellung der Lamellenkupplung (das heißt bei nicht an der Mutter 14 verrastetem Rotor 14).

Weiterhin ist die elektronische Steuerung ECU mit einer Sensoranordnung in Form eines Drehgebers 60 verbunden, der ein für die Rotation der ersten Welle 10 repräsentatives Signal (Betrag und Richtung) für die elektronische Steuerung ECU liefert. Die elektronische Steuerung ECU ist dazu eingerichtet, die elektrische Maschine 20 in der elektromotorischen Betriebsart zum Überführen der Lamellenkupplung 22 in die eingerückte Endstellung bzw. die ausgerückte Endstellung mit einer von der Drehzahl der ersten Welle 10 abweichenden Drehzahl zu betreiben.

In der ausgerückten Endstellung kann die elektrische Maschine auch als Generator betrieben werden um einen mit der elektronischen Steuerung ECU verbundenen Akkumulator 62 aufzuladen. Dies erlaubt einen Verzicht auf eine Lichtmaschine in dem Kraftfahrzeug.

Weiterhin besteht auch die Möglichkeit, wenn die erfindungsgemäße Anordnung an mehreren Stellen in dem Lastschalt-Automatgetriebe vorgesehen ist, so daß die elektrischen Maschinen insgesamt eine ausreichende Leistung bereitstellen, bei entsprechender Stellung der einzelnen Lamellenkupplungen und der Planetengetriebe auch die Verbrennungsmaschine elektrisch angetrieben in Rotation zu versetzen. So kann durch diese erfindungsgemäße Anordnung auch der Anlasser eingespart werden.

Schließlich sei bemerkt, daß die Zeichnungen nur zur prinzipiellen Darstellung der Erfindung dienen; die tatsächlichen Abmessungen und Proportionen funktionsfähiger Ausführungsformen der Erfindung können davon abweichen. Es ist auch für einen Fachmann ersichtlich und liegt im Bereich der Erfindung, die erfindungsgemäße Lösung nicht nur mit den beschriebenen Lamellenkupplungen sondern auch mit Trockenkupplungen einzusetzen.

## Patentansprüche

1. Ein Lastschalt-Automatgetriebe mit
- wenigstens einer Getriebeanordnung (9, 10) zum Auswählen der jeweiligen Übersetzungsverhältnisse,
- wenigstens einer gesteuert betätigbaren Lamellenkupplung (4, 5, 22) zum Festhalten oder Freigeben einzelner Elemente des Planetengetriebes, wodurch Gangwechselvorgänge ohne Unterbrechung des Drehmomentflusses möglich sind, wobei die Lamellenkupplung einen ersten und einen zweiten Lamellensatz (24, 26) aufweist, die ineinander greifen und durch axiales Gegeneinanderpressen mit einander in Reibungseingriff bringbar sind, wobei der erste Lamellensatz (24) mit einer ersten Welle (10) verbunden ist und der zweite Lamellensatz (26) mit einer zweiten Welle (28) verbunden ist und -die Lamellenkupplung mit einer einen Rotor (16) und einen Stator (18) aufweisenden elektrischen Maschine (20) getrieblich gekoppelt ist um durch die elektrische Maschine die beiden Lamellensätze (24, 26) in oder außer Reibungseingriff zu bringen, **dadurch gekennzeichnet, dass**
- der Rotor (16) der elektrischen Maschine (20) mittels eines Getriebes (12, 14) zur Umsetzung einer Drehbewegung in eine Schubbewegung drehbar und axial beweglich auf einer der Wellen (10, 28) gelagert ist.

2. Das Lastschalt-Automatgetriebe nach Anspruch 1 und 2, **dadurch gekennzeichnet, dass**
- das Getriebe zur Umsetzung einer Drehbewegung in eine Schubbewegung eine Spindel/Mutter-Anordnung (12, 14) ist, deren einer Teil (12) drehfest und axial unverschiebbar mit einer der Wellen (10, 28), und deren anderer Teil (14) mit dem Rotor (16) drehfest und axial unverschiebbar verbunden ist.

3. Das Lastschalt-Automatgetriebe nach Anspruch 1 und 2, **dadurch gekennzeichnet, dass**
- der Rotor (16) der elektrischen Maschine (20) bei Bestromung in Abhängigkeit von seiner Drehzahl und/oder Drehrichtung eine axiale Bewegung relativ zu der zweiten bzw. der ersten Welle (28; 10) ausführt und ohne Bestromung im wesentlichen die Drehzahl der ihn tragenden Welle (10, 28) hat.

4. Das Lastschalt-Automatgetriebe nach Anspruch 1, 2, und 3, **dadurch gekennzeichnet, dass**
- der Rotor (16) der elektrischen Maschine (20) mit dem Lamellensatz (26) drehbar verbunden ist, der an der den Rotor (16) tragenden Welle (10, 28) angeordnet ist, so dass bei einer Axialbewegung des Rotors (16) die beiden Lamellensätze (24, 26) in oder außer Reibungseingriff kommen.

5. Das Lastschalt-Automatgetriebe nach Anspruch 4, **dadurch gekennzeichnet, dass**
- der Rotor (16) der elektrischen Maschine (20) mit dem Lamellensatz (26) durch ein in axialer Richtung zumindest teilweise nachgiebiges Federelement (28) drehbar verbunden ist.

6. Das Lastschalt-Automatgetriebe nach Anspruch 3, **dadurch gekennzeichnet, dass**
- die elektrische Maschine (20) eine Asynchron-Maschine oder eine permanenterregte Maschine ist.

7. Das Lastschalt-Automatgetriebe nach Anspruch 3, **dadurch gekennzeichnet, dass**
- ein Element (12) der Spindel/Mutter-Anordnung (12, 14) eine eingerückte Endstellung und eine ausgerückte Endstellung mit jeweils einer Raststelle (42, 44) aufweist, und ein anderes Element (14) der Spindel/Mutter-Anordnung (12, 14) Rastelemente (52, 54) aufweist, die dazu eingerichtet sind, in die jeweiligen Raststellen (42, 44) einzurasten.

8. Das Lastschalt-Automatgetriebe nach Anspruch 3, **dadurch gekennzeichnet, dass**
- die elektrische Maschine (20) mit einer elektronischen Steuerung (ECU) verbunden ist, wobei die elektronische Steuerung (ECU) dazu eingerichtet ist, die elektrische Maschine (20) entweder als Elektromotor oder als elektrischer Generator zu betreiben.

9. Das Lastschalt-Automatgetriebe nach Anspruch 7 und 8, **dadurch gekennzeichnet, dass**
- die elektronische Steuerung (ECU) mit einer Sensoranordnung (60) verbunden ist, die dazu eingerichtet ist ein für die Rotation der ersten Welle (20) repräsentatives Signal bereitzustellen, und
- die elektronische Steuerung (ECU) dazu eingerichtet ist die elektrische Maschine (20) in der elektromotorischen Betriebsart zum Überführen der Lamellenkupplung in die eingerückte Endstellung bzw. die ausgerückte Endstellung mit einer von der Drehzahl der ersten Welle (20) abweichenden Drehzahl zu betreiben.

## Claims

1. An automatic powershift gearbox comprising
- at least one gearbox assembly (9, 10) for selecting the respective gear ratios;
- at least one multiple-disk clutch (4, 5, 22) capable of being actuated in a controlled manner for holding or releasing individual elements of the planet gear, which allows gear shift operations without interrupting the torque flow, with the multiple-disk clutch comprising a first and a second disk set (24, 26) which are in mutual engagement and can be brought into friction engagement by axial compression against one another, with the first disk set (24) being connected with a first shaft (10), and the second disk set (26) being connected with a second shaft (28) and the multiple-disk clutch being coupled by a transmission with an electric machine (20) comprising a rotor (16) and a stator (18), for bringing the two disk sets (24, 26) into and out of friction engagement by means of the electric machine,
**characterised in that**
- the rotor (16) of the electric machine (20) is supported rotatably and axially movable on one of the shafts (10, 28) by means of a gearbox (12, 14) for converting a rotary motion into a thrust motion.

2. The automatic powershift gearbox according to Claim 1, **characterised in that**
- the gearbox for converting a rotary motion into a thrust motion is a spindle/nut arrangement (12, 14), one part (12) of which is connected with one of the shafts (10, 28) in a non-rotatable and axially non-movable manner, and the other part (14) of which is connected with the rotor (16) in a non-rotatable and axially non-movable manner.

3. The automatic powershift gearbox according to Claims 1 and 2, **characterised in that**
- the rotor (16) of the electric machine (20) upon current supply carries out an axial movement relative to the second or the first, respectively, shaft (28, 10). which depends on its speed and/or sense of rotation, and in the currentless condition has essentially the speed of the shaft (10, 28) on which it is carried.

4. The automatic powershift gearbox according to Claims 1, 2 and 3, **characterised in that**
- the rotor (16) of the electric machine (20) is rotatably connected with the disk set (26) arranged at the shaft (10, 28) carrying the rotor (16), so that upon an axial movement of the rotor (16) the two disk sets (24, 26) are brought into or out of friction engagement.

5. The automatic powershift gearbox according to Claim 4, **characterised in that**
- the rotor (16) of the electric machine (20) is rotatably connected with the disk set (26) by means of a spring element (28) which is at least partially compliant in the axial direction.

6. The automatic powershift gearbox according to Claim 3, **characterised in that**
- the electric machine (20) is an asynchronous machine or a permanent field machine.

7. The automatic powershift gearbox according to Claim 3, **characterised in that**
- an element (12) of the spindle/nut arrangement (12, 14) has an engaged end position and a disengaged end position with one locking location (42, 44) each, and another element (14) of the spindle/nut arrangement (12, 14) has locking elements (52, 54) which are adapted to lock in the respective locking locations (42, 44).

8. The automatic powershift gearbox according to Claim 3, **characterised in that**
- the electric machine (20) is connected with an electronic control unit (ECU), with the electronic control unit (ECU) being adapted to operate the electric machine (20) either as an electric motor or as an electric generator

9. The automatic powershift gearbox according to Claims 7 and 8, **characterised in that**
- the electronic control unit (ECU) is connected with a sensor arrangement (60) which is adapted to provide a signal indicative for the rotation of the first shaft (10); and
- the electronic control unit (ECU) is adapted to operate the electric machine (20) in the electric motor mode with a speed differing from the speed of the first shaft (10), for bringing the multiple-disk clutch into the engaged or disengaged, respectively, position.

## Revendications

1. Boîte de vitesses automatique à passage sous charge, comprenant :
-- au moins un agencement à engrenages (9, 10) pour choisir le rapport de démultiplication respectif,
-- au moins un embrayage à lamelles (4, 5, 22) à actionnement commandé pour fixer ou pour libérer des éléments individuels de la transmission à planétaires, grâce à quoi des opérations de changement de rapports de vitesse sont possibles sans interrompre le flux du couple de rotation, l'embrayage à lamelles comprenant un premier jeu et un second jeu de lamelles (24, 26) qui sont en engagement l'un dans l'autre et qui peuvent être amenés en engagement de friction l'un avec l'autre par pressage axial l'un contre l'autre, le premier jeu de lamelles (24) étant relié à un premier arbre (10) et le second jeu de lamelles (26) étant relié à un second arbre (28), et
-- l'embrayage à lamelles est couplé en termes d'entraînement à un groupe électrique (20) qui comprend un rotor (16) et un stator (18) afin d'amener, au moyen du groupe électrique (20) les deux jeux de lamelles (24, 26) en engagement de friction ou hors d'un tel engagement,
**caractérisée en ce que** :
-- le rotor (16) du groupe électrique (20) est monté en rotation et en translation axiale sur l'un des arbres (10, 28) au moyen d'un système de transmission (12, 14) pour convertir un mouvement de rotation en un mouvement de translation.

2. Boîte de vitesses automatique à passage sous charge selon la revendication 1, **caractérisée en ce que** :
-- le système de transmission pour convertir un mouvement de rotation en un mouvement de translation est un agencement à broche-et-écrou (12, 14) dont l'une des parties (12) est reliée solidairement en rotation et sans possibilité de déplacement axial à l'un des arbres (10, 28), et dont l'autre partie (14) est reliée solidairement en rotation et sans possibilité de déplacement axial au rotor (16).

3. Boîte de vitesses automatique à passage sous charge selon les revendications 1 et 2, **caractérisée en ce que** :
-- le rotor (16) du groupe électrique (20) exécute, lors de l'alimentation électrique et en fonction de sa vitesse de rotation et/ou de son sens de rotation, un mouvement axial par rapport au second ou au premier arbre (28 ; 10), et sans alimentation électrique, il a essentiellement la vitesse de rotation de l'arbre qui le porte (10, 28).

4. Boîte de vitesses automatique à passage sous charge selon les revendications 1, 2 et 3, **caractérisée en ce que** :
-- le rotor (16) du groupe électrique (20) est relié avec possibilité de rotation au jeu de lamelles (26) qui est agencé sur l'arbre (10, 28) portant le rotor (16), de sorte que, lors d'un déplacement axial du rotor (16), les deux jeux de lamelles (24, 26) viennent en engagement de friction, ou hors d'un tel engagement.

5. Boîte de vitesses automatique à passage sous charge selon la revendication 4, **caractérisée en ce que** :
-- le rotor (16) du groupe électrique (20) est relié avec possibilité de rotation au jeu de lamelles (26) au moyen d'un élément élastique (28) capable de fléchir au moins partiellement en direction axiale.

6. Boîte de vitesses automatique à passage sous charge selon la revendication 3, **caractérisée en ce que** :
-- le groupe électrique (20) est un groupe asynchrone ou un groupe à excitation permanente.

7. Boîte de vitesses automatique à passage sous charge selon la revendication 3, **caractérisée en ce que** :
-- un élément (12) de l'agencement à broche-et-écrou (12, 14) présente une position finale embrayée et une position finale débrayée avec à chaque fois un emplacement d'enclenchement (42, 44), et un autre élément (14) de l'agencement à broche-et-écrou (12, 14) présente des éléments d'enclenchement (52, 54), qui sont réalisés de manière à s'enclencher dans les emplacements d'enclenchement respectifs (42,44).

8. Boîte de vitesses automatique à passage sous charge selon la revendication 3, **caractérisée en ce que** :
-- le groupe électrique (20) est relié à une commande électronique (ECU), ladite commande électronique (ECU) étant réalisée de manière à faire fonctionner le groupe électrique (20) soit comme moteur électrique soit comme générateur électrique.

9. Boîte de vitesses automatique à passage sous charge selon les revendications 7 et 8, **caractérisée en ce que** :
-- la commande électronique (ECU) est reliée à un agencement capteur (60) qui est réalisé de manière à fournir un signal représentatif pour la rotation du premier arbre (20), et
-- la commande électronique (ECU) est réalisée de manière à faire fonctionner le groupe électrique (20) dans le mode de fonctionnement en moteur électrique pour faire passer l'embrayage à lamelles dans la position finale embrayée ou dans la position finale débrayée avec une vitesse de rotation qui diffère de la vitesse de rotation du premier arbre (20).
